Europäisches Patentamt

European Patent Office

Office européen des brevets

(11) Publication number: **0 195 461 B2**

# NEW EUROPEAN PATENT SPECIFICATION

(45) Date of publication of the new patent specification: **14.09.94**

(51) Int. Cl.5: **B01D 63/08**, B01D 69/10

(21) Application number: **86105511.9**

(22) Date of filing: **19.05.82**

(60) Publication number of the earlier application in accordance with Art.76 EPC: **0 066 198**

(54) **Apparatus for the separation of a liquid into two fractions.**

(30) Priority: **20.05.81 DK 2228/81**

(43) Date of publication of application:
**24.09.86 Bulletin 86/39**

(45) Publication of the grant of the patent:
**30.01.91 Bulletin 91/05**

(45) Mention of the opposition decision:
**14.09.94 Bulletin 94/37**

(84) Designated Contracting States:
**AT BE CH DE FR GB IT LI LU NL SE**

(56) References cited:
**DE-A- 2 603 505**
**DE-A- 2 653 875**
**FR-A- 2 170 147**
**FR-A- 2 392 696**
**US-A- 3 827 563**

**R.F. MADSEN:"Hyperfiltration and Ultrafiltration in Plate-and-Frame Systems", 1977, ELSEVIER SCIENTIFIC PUBLISHING COMPANY, Amsterdam, pp. 109-112**

(73) Proprietor: **DOW DANMARK A/S**
**Toldbodgade 33**
**DK-1253 Copenhagen K (DK)**

(72) Inventor: **Madsen, Rud Frik**
**Strandpromenaden 38**
**DK-4900 Nakskov (DK)**
Inventor: **Nielsen, Werner Kofod**
**Bresemanns Allé 43**
**DK-4900 Nakskov (DK)**
Inventor: **Johnsen, Aksel Fons**
**Bygvaenget 1**
**Sandby**
**DK-4912 Harpelunde (DK)**

(74) Representative: **Patentanwälte Leinweber & Zimmermann**
**Rosental 7/II Aufg.**
**D-80331 München (DE)**

EP 0 195 461 B2

**Description**

This invention relates to an apparatus for the separation of a liquid into two fractions (in the following referred to as a permeate fraction and a concentrate fraction, respectively) by filtration through semi-permeable membranes, said apparatus comprising a stack of semi-permeable membranes and elongated membrane support plates having ribs projecting from the surfaces of said plates and forming a plurality of curved separate flow passages extending along the surfaces of the membranes, each membrane support plate comprising at least two spaced holes extending therethrough so as to form two main flow passages extending longitudinally of said stack, means for supplying liquid to be fractionated to one of said main flow passages, means for discharging a permeate fraction and means for discharging a concentrate fraction from said stack.

The prior art apparatuses of the above mentioned type may be designed in a manner such that the liquid to be fractionated flows through the flow passages extending parallel to the membrane surfaces in a series flow pattern, a parallel flow pattern or a combination of a series flow and a parallel flow pattern.

A prior art apparatus (FR-A-2 170 147) comprises elliptical membrane support plates and the centres of the holes provided in said membrane support plates are located in or adjacent to the focal points to the ellipses. Such a prior art apparatus suffers from the drawback that the liquid flowing along the membrane surfaces from one main flow passage towards the other is not uniformly distributed over said membrane surface and consequently an optimum filtration efficiency cannot be achieved.

Another prior art apparatus (CH-A-542 639) comprises for obtaining an improved distribution of the liquid to be fractionated over the membrane surfaces flat membrane support plates having continuous ribs projecting from the surfaces of said plates. When assembled in a stack of membranes and membrane support plates, the ribs cause the membranes located between two membrane support plates to be pressed together within narrow zones thus forming several separate flow passages extending from one main flow passage to the other one. Similar flow passages may be formed in case only one membrane is located in the space between two adjacent membrane support plates.

These measures have not provided a fully satisfactory solution to the problem discussed above, i. e. because of the fact that the flow resistance of the relatively long flow passages is considerably higher than that of the relatively short flow passages.

Here it should be mentioned that a furthermore known apparatus (DE-A-26 03 505) comprises membrane support plates of decreasing thickness from its center part to the periphery thereof, said plates which are porous and permeable to liquid do not have ribs for forming a plurality of curved separate flow passages extending along the surfaces of the membranes. In the description of this apparatus it is mentioned that the additional use of ribs as disclosed in CH-A-542 639 is disadvantageous, undesirable and should be avoided.

For the filtration of blood it is furthermore known (DE-A-26 53 875) to use an apparatus comprising a number of circular filter plates having radial ribs extending from one of their surfaces to form a number of filter chambers in the form of channels between said filter plates, which chambers contain a filter medium dividing the chambers into a channel for introducing the liquid to be filtrated and a channel for discharging the filtrate obtained, and comprising means for introducing the liquid to be filtrated at the central part of said filter plates and means for discharging the concentrated fraction at the periphery of said filter plates. The introduction channels have a height of between 8 and 150 $\mu$m, and the width of the introduction channels increases in a manner so that the reduction in flow resistance obtained thereby cancels out the increase in flow resistance resulting from the increase in the viscosity of the liquid to be filtrated. The important features of this known apparatus therefore are that all radial channels have identical lengths and that each channel has a varying width.

The object of the invention is to improve the filtration efficiency of the membranes in an apparatus of the above mentioned type and to obtain a uniform distribution of the liquid to be fractionated over the membrane surfaces during the flow of said liquid from one main flow passage towards the other.

The apparatus of the invention in which this problem is solved is characterized in that the heights of the ribs on each membrane support plate increase with increasing distances from the central part of said plate, wherein the relationship of the height of any two flow passages created between ribs corresponds to the formula

EP 0 195 461 B2

$$\frac{b_2}{b_1} \cdot \left(\frac{L_2}{L_1}\right)^{\frac{\frac{1}{n}}{\frac{1}{n}+2}}$$

wherein $b_1$ is the height of the first compared channel, $b_2$ is the height of the second compared channel, $L_1$ is the length of the first compared channel, $L_2$ is the length of the second compared channel, and n is less than 1 and higher than 0.05, wherein n is empirically determined by treating a liquid fulfilling the shear force equation

$$\tau = K \times \gamma^n$$

where $\tau$ is the shear force, $\gamma$ is the shear tension and K is an empirically determined constant.

The increasing heights of the ribs viewed in a direction from the central part of the membrane support plates towards their periphery and the resultant increasing cross-sectional area of the flow passages extending along the membrane surfaces compensate for the increasing flow resistance due to the increasing lengths of said flow passages. This manner of obtaining a more uniform distribution of the liquid to be fractionated over the membrane surfaces is suitable when fractionating dairy products and other liquids which are governed by said equation

$$\tau = K \times \gamma^n$$

where $\tau$ is the shear force, $\gamma$ is a shear tension, n is an integer which is determined empirically and K is an empirically determined constant.

When fractionating such liquids, the ratio of the height $b_1$ of one flow passage to the height $b_2$ of another flow passage should preferably be:

$$\frac{b_2}{b_1} \cdot \left(\frac{L_2}{L_1}\right)^{\frac{\frac{1}{n}}{\frac{1}{n}+2}}$$

wherein $L_1$ and $L_2$ are the lengths of two flow passages.

In practice n is less than 1 but higher than 0.05 and if n = 0.2, the relationship between the length L of the flow passages and the height b of said passages is as follows:

| | |
|---|---|
| $L_1$ = 192.8 mm | $b_1$ = 1.30 mm |
| $L_2$ = 220.8mm | $b_2$ = 1.44mm |
| $L_3$ = 264.7mm | $b_3$ = 1.64mm |
| $L_4$ = 326.0 mm | $b_4$ = 1.90mm |
| $L_5$ = 411.2 mm | $b_5$ = 2.24 mm. |

The membrane support plates should preferably have the same total thickness all over the plates and, therefore, the thickness of the plates per se preferably increase seen in a direction from their periphery towards their central part and more preferably in the same manner as the heights of the ribs increase in the opposite direction.

It should be understood that ribs having varying heights as described above may also be provided in an apparatus of the type first described, i.e. an apparatus in which the membrane support plates have a central blocked zone, and in which these plates optionally are of a super-elliptical shape.

The invention will now be described in further detail with reference to the drawings in which

Fig. 1 is a plan view of a membrane support plate for use in an embodiment of the apparatus of the invention,

3

Fig. 2 is a cross-sectional view taken along the line II-II of the membrane support plate of Fig. 1,

Fig. 3 is an exploded view of a preferred embodiment of the apparatus of the invention,

Fig. 4 is an exploded view of another preferred embodiment of the apparatus of the invention, and

Fig. 5 is a cross-sectional view taken through the edge of a hole in a membrane support plate and the adjacent membranes as well as the sealing rings cooperating therewith.

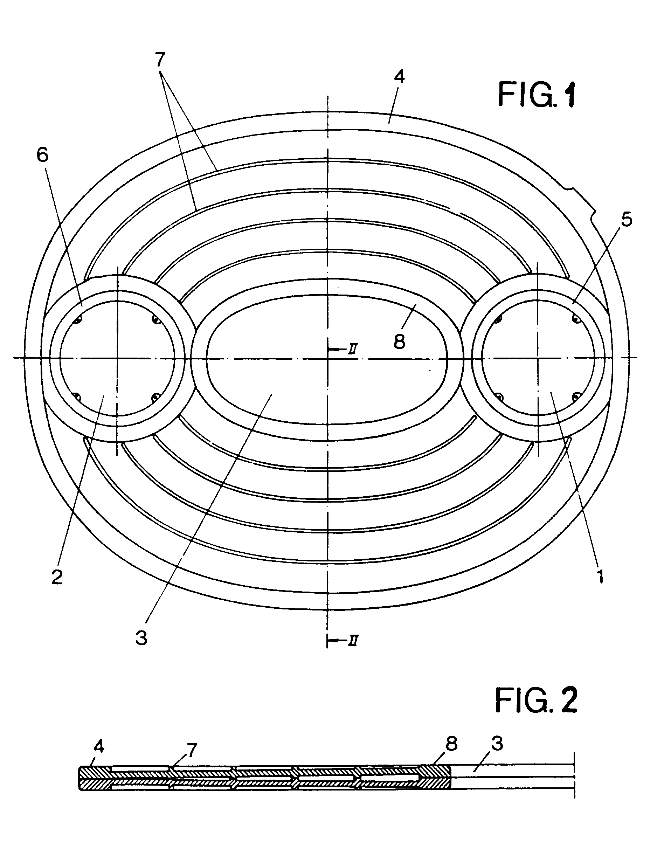

The membrane support plate illustrated in Fig. 1 and 2 comprises two circular holes 1 and 2 and an elliptical central hole 3. An outer annular sealing flange 4 is provided along the periphery of said membrane support plate. Membrane sealing means 5 and 6, respectively, are provided at the edges of the circular holes 1 and 2. The surfaces of the membrane support plates comprise upstanding ribs 7 of a curved shape and an inner annular sealing flange 8 extending along the periphery of the central elliptical hole 3.

The contour of the membrane support plate is determined by the fact that the inner sealing flange 8 has a shape governed by the equation:

$$\frac{x^{2.3}}{a^{2.3}} + \frac{y^{2.3}}{b^{2.3}} = 1$$

The height of the ribs 7 increases when viewed in a direction from the central hole 3 towards the periphery of the plate. The variation in height causes that the height of the flow passages formed between two adjacent membranes and two adjacent sets of ribs increases viewed in the above mentioned direction and thus compensates for the varying length of the flow passages in relation to the total flow resistance.

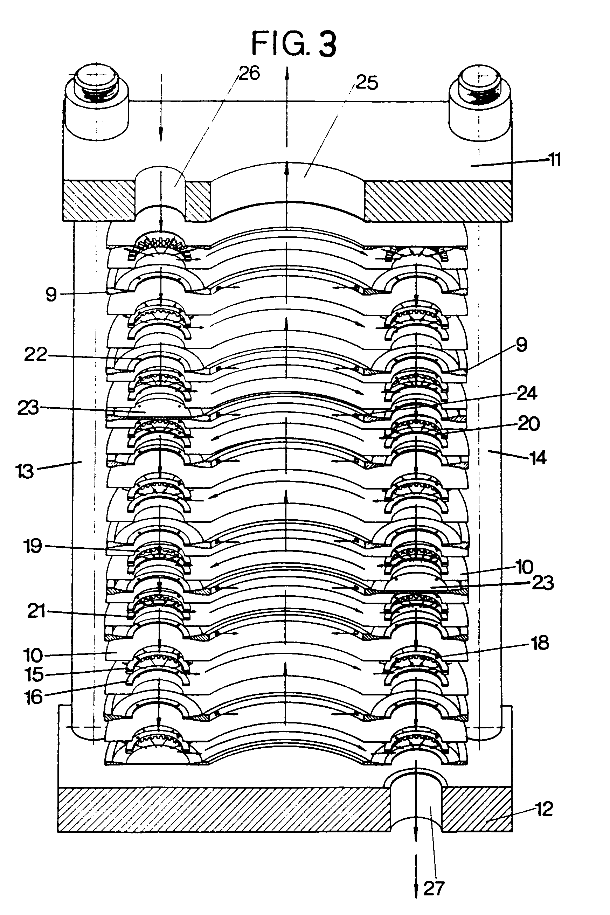

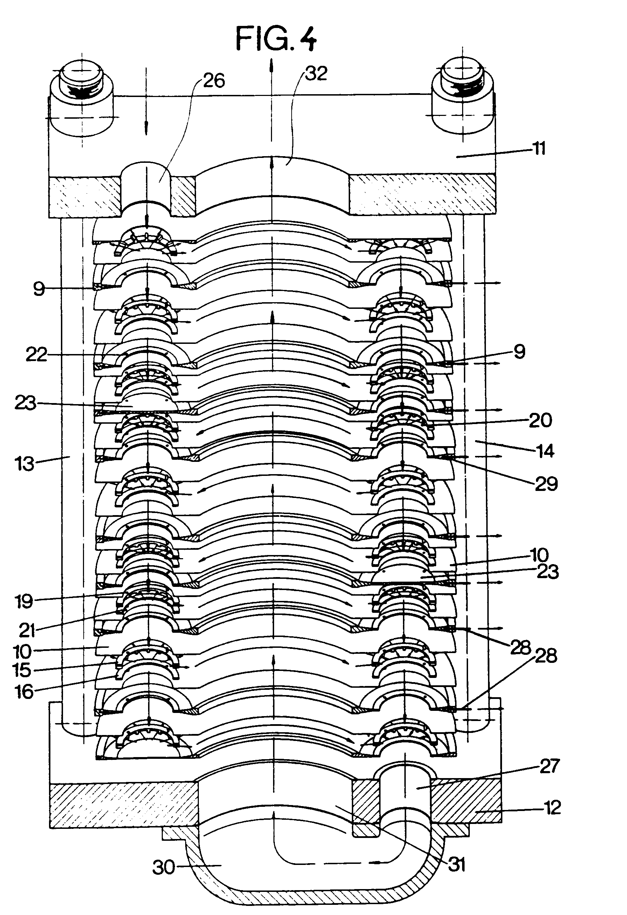

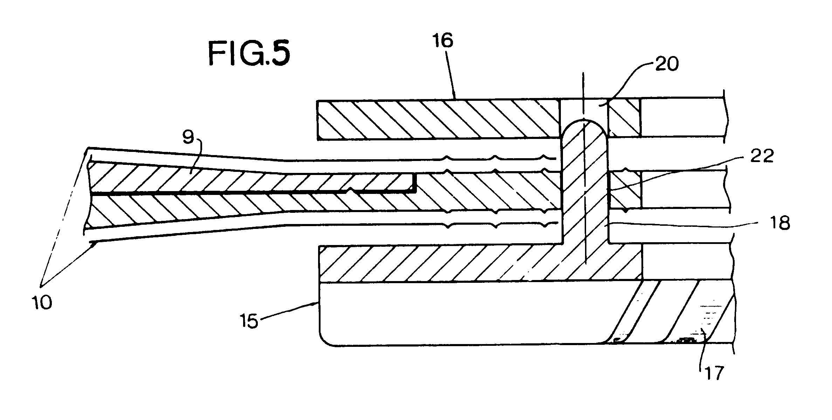

The apparatuses shown in Fig. 3 and Fig. 4 comprise a stack of membrane support plates 9 which are constructed essentially as the plate shown in Fig. 1 and Fig. 2 and membranes 10 with two membranes 10 being located between two adjacent membrane support plates 9. This stack is maintained in a compressed state between two end plates 11 and 12 by means of clamp bolts 13 and 14. The holes 1 and 2 in the membrane support plates 9 form together with corresponding holes in the membranes 10 two main flow passages extending longitudinally of said stack. The membranes 10 are sealed to the membrane support plates 9 at the edges of the holes 1, 2 in said plates by means of the above mentioned sealing means 5,6. One of these sealing means which comprises a lower part 15 and a top part 16 is illustrated in further detail in Fig. 5. The underside of said lower part 15 comprises projections 17 with intervening passages allowing liquid to flow out of or into the adjacent main flow passage. The upperside of said lower part 15 comprises two diametrically located pins 18 and two diametrically located holes 19.

The underside of the top part 16 comprises two diametrically located holes 20 adapted to receive the pins 18 and two diametrically located pins 21 adapted to be inserted into the holes 19.

The zones of the membrane support plates located adjacent to the holes 5 and 6 comprise holes 22 having such dimensions and locations that the ends of the pins 18 and 21 can be inserted into said holes when it is desired to seal the membranes to the membrane support plates in the zone adjacent to the holes 5 and 6.

The stacks illustrated also comprise barrier plates 23 mounted at different levels in the two main flow passages so as to close the main flow passages at these points and thus force a liquid flowing through such a main flow passage to move in a parallel flow pattern towards the other main main flow passage in separate parallel flow passages extending parallel to the membrane surfaces.

The membrane support plates of the apparatus shown in Fig. 3 comprise ducts 24 extending from the top and bottom surfaces of each plate to a central flow passage formed by the central holes in the membrane support plates. This central flow passage is connected with a central discharge opening 25 in the upper end plate 11.

The liquid to be fractionated in the apparatus shown in Fig. 3 is introduced through an inlet 26 in the upper end plate 11 and is passed into a longitudinally extending main flow passage. Due to the presence of the barrier plates 23 in said main flow passage the liquid is forced to flow towards the other main flow passage in the form of parallel streams moving parallel and in intimate contact with the membrane surfaces. After having reached the other main flow passage these streams are combined and the liquid moves down through said main flow passage. A barrier plate 23 mounted therein forces the liquid to flow towards the first main flow passage in the form of further parallel streams. Subsequently, these streams are combined and the liquid flows further down the stack within said first main flow passage until it is forced towards the second main flow passage as described above. Finally, the liquid is discharged from the apparatus through an outlet 27 in the lower end plate as a concentrate fraction.

During the movement of the partial streams of liquid to be fractionated along the surfaces of the membranes 10 the relatively low molecular compounds pass through said membranes in the form of a permeate which subsequent flows through the ducts 24 into the central flow passage and is discharged through the discharge opening 25 as a permeate fraction.

In the apparatus shown in Fig. 4 the edge of each membrane support plate 9 comprises a permeate discharge pipe 28 which is connected with an annular internal channel 29 which in turn is connected with both the top and bottom surfaces of each membrane support plate.

The apparatus shown in Fig. 4 also comprises a connecting channel 30 connecting a main flow passage with an inlet opening 31 in the lower end plate 12. The inlet opening 31 is connected with the central flow passage and the latter is connected with a central outlet 32 in the upper end plate 11.

The liquid to be fractionated in the apparatus shown in Fig. 4 is introduced through the hole 26 in the upper end plate 11 and flows through the apparatus in the same manner as explained in connection with the description of the operation of the apparatus shown in Fig. 3 with the exception that the concentrate fraction discharged through the outlet 27 via the connecting channel 30 is introduced into the central flow passage and flows up through the stack and out of the outlet 32.

The liquid fractions passing through the membranes supported by the membrane support plates 9 are collected in the annular channels 29 and the collected permeate is discharged through the permeate discharge pipes 28. The liquid being discharged through the pipes 28 forms the permeate fraction.

The drawings show vertically mounted stacks of membranes and membrane support plates. However, it should be understood that in many cases it is advantageous to use a horizontally mounted stack because such a mounting facilitates the replacement of defect membranes and/or membrane support plates.

**Claims**

1. An apparatus for the separation of a liquid into at least one permeate fraction and at least one concentrate fraction by filtration through semi-permeable membranes, said apparatus comprising a stack of semi-permeable membranes (10) and elongated membrane support plates (9) having ribs (7) projecting from the surfaces of said plates and forming a plurality of separate curved flow passages extending along the surfaces of the membranes (10), each membrane support plate (9) comprising at least two spaced holes (1,2) extending therethrough so as to form two main flow passages extending longitudinally of said stack, means (26) for supplying liquid to be fractionated to one of said main flow passages, means (25,28) for discharging a permeate fraction and means (27,32) for discharging a concentrate fraction from said stack, characterized in that the heights of the ribs (7) on each membrane support plate (9) increase with increasing distances from the central part of said plate, wherein the relationship of the height of any two flow passages created between ribs corresponds to the formula

$$\frac{b_2}{b_1} = \left(\frac{L_2}{L_1}\right)^{\frac{1}{\frac{1}{n}+2}}$$

wherein $b_1$ is the height of the first compared channel, $b_2$ is the height of the second compared channel, $L_1$ is the length of the first compared channel, $L_2$ is the length of the second compared channel, and n is less than 1 and higher than 0,05, wherein n is empirically determined by treating a liquid fulfilling the shear force equation

$$\tau = K \times \gamma^n$$

where $\tau$ is the shear force, $\gamma$ is the shear tension and K is an empirically determined constant.

2. An apparatus as in claim 1, characterized in that the thickness of each membrane support plate (9) per se increases when viewed in a direction from its periphery towards its central part.

3. An apparatus as in claim 1 or claim 2, characterized in that the membranes (10) are pressed against the membrane support plates (9) in annular zones adjacent to the holes (1, 2) in said membrane support plates by sealing means comprising two annular members (15, 16) which are interconnected by pins (18, 21) provided on one member (15, 16) and inserted into holes (20, 19) in the other member (16, 15).

4. An apparatus as in claim 3, characterized in that holes (19, 20) for the insertion of the pins (21, 18) provided on the annular sealing members (15, 16) are provided in the zones of the membrane support plates (9) adjacent to the holes (1, 2) therein.

**Patentansprüche**

1. Vorrichtung zum Trennen einer Flüssigkeit in mindestens eine durchdringende Fraktion und mindestens eine konzentrierte Fraktion durch Filtration durch halbdurchlässige Membranen, bestehend aus einem Stapel halbdurchlässiger Membranen und länglichen Membranenstützplatten (9), die mit Rippen (7) versehen sind, die von Oberflächen dieser Platten abstehen und mehrere getrennte gekrümmte Strömungskanäle bilden, die sich längs der Oberflächen der Membranen (10) erstrecken, wobei jede Membranenstützplatte (9) mindestens zwei im Abstand angeordnete Öffnungen (1, 2) aufweist, welche diese durchsetzen, um zwei Hauptströmungskanäle zu bilden, die sich in Längsrichtung des Stapels erstrecken, Mitteln (26) für die Zufuhr der zu trennenden Flüssigkeit zu einem der Hauptströmungskanäle, Mitteln (25, 28) für die Ableitung einer durchdringenden Fraktion und Mitteln (27, 32) für die Ableitung einer konzentrierten Fraktion von dem Stapel, dadurch **gekennzeichnet,** daß die Höhe der Rippen (7) auf jeder Membranenstützplatte (9) mit dem Abstand vom zentralen Teil dieser Platte zunimmt, wobei das Verhältnis zwischen der Höhe zweier beliebiger zwischen den Rippen gebildeter Strömungskanäle der Gleichung entspricht

$$\frac{b_2}{b_1} = \left(\frac{L_2}{L_1}\right)^{\frac{\frac{1}{n}}{\frac{1}{n}+2}}$$

dabei ist $b_1$ die Höhe des ersten Vergleichskanals, $b_2$ ist die Höhe des zweiten Vergleichskanals, $L_1$ ist die Länge des ersten Vergleichskanals, $L_2$ ist die Länge des zweiten Vergleichskanals und n ist kleiner als 1 und größer als 0,05, wobei n empirisch bestimmt wird durch die Behandlung einer Flüssigkeit, deren Scherkraft die Gleichung erfüllt

$\tau = K \times \gamma^n$

dabei ist $\tau$ die Scherkraft, $\gamma$ ist die Scherspannung und K ist eine empirisch bestimmte Konstante.

2. Vorrichtung nach Anspruch 1, dadurch **gekennzeichnet,** daß die Dicke einer jeden Membranenstützplatte (9) selbst von ihrem Umfang zum zentralen Teil hin zunimmt.

3. Vorrichtung nach Anspruch 2, dadurch **gekennzeichnet,** daß die Membranen (10) in den Öffnungen (1, 2) der Membranenstützplatten (9) benachbarten Ringzonen gegen die Membranenstützplatten durch Dichtungsmittel angepreßt werden, die aus zwei ringförmigen Teilen (15, 16) bestehen, die durch Stifte (18, 21) miteinander verbunden sind, die an dem einen Teil (15, 16) angeordnet und in Löcher (20, 19) des anderen Teils (16, 15) eingesetzt sind.

4. Vorrichtung nach Anspruch 3, dadurch **gekennzeichnet,** daß die Membranenstützplatten (9) in den Öffnungen (1, 2) derselben benachbarten Zonen mit Löchern (22) zur Aufnahme der an den ringförmigen Dichtungsteilen (15, 16) angeordneten Stifte (21, 18) versehen sind.

**Revendications**

1. Appareil pour la séparation d'un liquide en au moins une fraction de permeat et au moins une fraction de concentré par filtration à travers des membranes semi-perméables, ledit appareil comprenant une pile de membranes semi-perméables (10) et des plaques de support de membrane allongées (9) comportant des nervures (7) faisant saillie à partir des surfaces desdites plaques et formant une pluralité de passages d'écoulement séparés et incurvés s'étendant le long des surfaces des membranes (10) chaque plaque de support de membrane (9) comprenant au moins deux trous espacés (1, 2) s'étendant à travers de façon à former deux passages d'écoulement principaux s'étendant longitudinalement par rapport à ladite pile, un moyen (26) pour alimenter l'un desdits passages principaux d'écoulement en liquide devant être fractionné, des moyens (25, 28) pour décharger une fraction de permeat et des moyens (25, 28) pour décharger une fraction de permeat et des moyens (27, 32) pour décharger une fraction de concentré de ladite pile, caractérisé en ce que les hauteurs des nervures (7) sur chaque plaque de support de membrane (9) augmentent avec les distances croissantes par rapport à la partie centrale de ladite plaque où la relation entre la hauteur de chacun des deux passages d'écoulement formés entre les nervures correspond à l'équation

$$\frac{b_2}{b_1} \cdot \left(\frac{L_2}{L_1}\right)^{\frac{\frac{1}{n}}{\frac{1}{n}+2}}$$

dans laquelle $b_1$ est la hauter du premier canal comparé, $b_2$ est la hauteur du second canal comparé, $L_1$ est la longueur du premier canal comparé, $L_2$ est la longueur du deuxième canal comparé, et n est inférieur à 1 et supérieur à 0,05, n étant empiriquement déterminé en traitant un liquide satisfaisant à l'équation de force de cisaillement

$$\tau = K \times \gamma^n$$

où $\tau$ est la force de cisaillement, $\gamma$ est la tension de cisaillement et K est une constante déterminée empiriquement.

2. Appareil selon la revendication 1, caractérisé en ce que l'épaisseur de chaque plaque de support de membrane (9) augmente en soi lorsque vue dans une direction en partant de sa périphéries vers sa partie central.

3. Appareil selon la revendication 1 ou 2, caractérise en ce que les membranes (10) sont comprimées contre la plaques de support de membrane (9) en des zones annulaires au voisinage des trous (1, 2) dans lesdites plaques de support de membrane par des moyens formant joint comprenant deux membres annulaires (15, 16) qui sont interconnectés par des goupilles (18, 21) prévues sur un membre (15, 16) et insérées dans les trous (20, 19) dans l'autre membre (16, 15).

4. Appareil selon la revendication 3, caractérisé en ce que les trous (19, 20) pour l'insertion des goupilles (21, 18) prévues sur les membres formant joint annulaires (15, 16) sont prévues dans les zones des plaques de support de membrane (9) au voisinage des trous (1, 2).

FIG.1

FIG.2

# FIG. 3

# FIG.4

# FIG.5

EP 0 195 461 B2